(19) Europäisches Patentamt
European Patent Office
Office européen des brevets

(11) Numéro de publication: **0 077 718**
**B1**

(12) **FASCICULE DE BREVET EUROPÉEN**

(45) Date de publication du fascicule du brevet: **14.01.87**

(51) Int. Cl.[4]: **C 08 G 73/10**

(21) Numéro de dépôt: **82401866.7**

(22) Date de dépôt: **11.10.82**

(54) **Procédé de préparation de compositions de polyimides aromatiques présentant une solubilité élevée et leurs utilisations.**

(30) Priorité: **19.10.81 FR 8119733**

(43) Date de publication de la demande: **27.04.83 Bulletin 83/17**

(45) Mention de la délivrance du brevet: **14.01.87 Bulletin 87/3**

(84) Etats contractants désignés: **BE DE GB IT NL**

(56) Documents cité:
**FR-A-1 601 091**
**FR-A-2 157 697**
**US-A-3 939 109**

(73) Titulaire: **INSTITUT FRANCAIS DU PETROLE, 4, Avenue de Bois- Préau, F-92502 Rueil- Malmaison (FR)**

(72) Inventeur: **Rabilloud, Guy, 27, Boulevard Clémenceau, F-38100 Grenoble (FR)**
Inventeur: **Senneron, Michel, Résidence l'Emmendra 23, avenue du Vercors, F-38240 Meylan (FR)**
Inventeur: **Cohen, Choua, 111, avenue Barthélémy Buyer, F-69005 Lyon (FR)**
Inventeur: **Mariaggi, Paul, La Rivoire 3, F-38200 Seyssuel (FR)**
Inventeur: **Sillion, Bernard, 13, rue des Erables, F-78150 Rocquencourt (FR)**

**EP 0 077 718 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

La présente invention a pour objet un procédé de préparation d'une composition de polyimide aromatique présentant une solubilité particulièrement élevée dans de nombreux solvants organiques et d'excellentes propriétés adhésives. Ces compositions peuvent être employées comme liant dans la fabrication des matériaux composites, comme vernis isolant pour le revétement et l'émaillage des conducteurs métalliques, comme base pour l'élaboration de compositions adhésives, de mousses et matériaux cellulaires et comme films de protection capables de résister à des températures élevées.

L'invention concerne plus particulièrement un procédé de préparation de compositions de polymères obtenues en faisant réagir une diamine aromatique avec un diacide-diester ou un tétraester dérivés de l'acide benzhydrol tétracar-boxylique-3,3',4,4' à une température assez élevée pour qu'il y ait formation de polyimides aromatiques.

On sait que les polyimides aromatiques sont généralement des polymères infusibles et peu ou pas solubles dans les solvants organiques. Pour cette raison, il faut employer des techniques de mise en oeuvre qui passent soit par l'intermédiaire d'un polymère soluble non cyclisé, soit par un mélange de réactifs fusibles qui, par un traitement thermique approprié, peut donner un matériau polymère.

Dans la première technique, le polyimide est préparé en deux étapes successives. Au cours de la première étape, une réaction de polycondensation entre une diamine aromatique et un dianhydride d'acide tétracarboxylique dans un solvant organique polaire aprotique conduit à une solution d'un polyamide-acide de haute masse moléculaire. Cette solution doit être conservée au froid et à l'abri de l'humidité car elle est sensible à la chaleur et à l'hydrolyse.

La seconde étape du processus de fabrication consiste à utiliser la solution contenant généralement de 10 à 20 % en poids de polyamide-acide pour préparer un film de polymère par évaporation progressive du solvant. La transformation du polyamide-acide en film de polyimide est effectuée par déshydratation thermique ou chimique. Il est évident que cette technique limite l'utilisation des polyimides à la fabrication de films ou de revétements de faible épaisseur car, outre le départ de 80 à 90 % en poids de solvant, il faut également éliminer une molécule d'eau de cyclisation pour chaque centre réactif.

Cette technique est illustrée par le brevet US-A-3 939 109, selon lequel on prépare des solutions de polyamide-acides intermédiaires en faisant réagir le dianhydride de l'acide benzhydrol-tétracarboxylique-3,3',4,4' avec une diamine ayant au moins 2 atomes de carbone, en particulier le bis (amino-4 phényl) éther, au sein d'un solvant polaire aprotique. Ces solutions sont ensuite transformées en polyimides par élimination du solvant et cyclisation. On notera par ailleurs l'enseignement du brevet US-A-3 293 267, qui indique que le dianhydride du benzhydrol est susceptible de réagir sur ses propres fonctions alcools pour donner des fonctions esters.

La méthode générale de préparation des polyimides aromatiques décrite ci-dessus est, dans l'état actuel de la technique, la plus largement utilisée malgré les contraintes qui y sont associées. Elle exige en effet des monomères d'une extrême pureté, une exclusion rigoureuse de l'eau, un choix de solvant limité, des conditions de synthèse et de conservation des polymères très délicates. Avec des traitements thermiques adaptés aux solvants et aux polymères, il est cependant possible d'utiliser les polyamides-acides pour synthétiser des polyimides aromatiques utilisables comme films, vernis et adhésifs.

Une autre méthode connue de préparation des polyimides aromatiques consiste à remplacer les dianhydrides d'acides tétracarboxyliques par leurs produits de réaction sur les alcools aliphatiques primaires, c'est à dire par les diesters ou les tétraesters d'alkyle correspondants. Cette techmique est décrite par V.L. Bell (Polymer Letters, 1967, 5, 941-946) et dans US-A- 3 700 649 pour les diesters d'alkyle des acides pyromellitique et benzophénone tétracarboxylique-3, 3',4,4' et diverses diamines aromatiques. Le mélange des monomères est tranformé en polyimides par un chauffage progressif sous azote jusqu'à 300°C. Comme la réaction de polycondensation est effectuée à la fusion des réactifs, seuls les monomères qui donnent des polyméres fusibles peuvent conduire à des hauts polymères. Dans les autres cas, il se forme des oligomères de faible masse moléculaire insolubles et infusibles comme le montrent les exemples comparatifs 1 et 2 de la présente invention.

Cette technique est également illustrée dans FR-A- 2 031 847, selon lequel les esters de l'acide méta-phénylène bis-4-(hydroxy méthylène phtalique) sont mis en réaction avec des diamines aromatiques pour préparer des polyimides solubles. Dans ce cas la solubilite des polymères est obtenue par un accroissement du nombre d'enchaînements carbinols dans l'unité récurrente du polymère, ce qui limite considérablement le domaine d'application de ces produits car la préparation du monomère de base nécessite cinq opérations successives dont le rendement global est d'environ 50 %. De plus, l'augmentation du nombre des enchaînements carbinols a pour conséquence une diminution de la stabilité thermique et de la résistance à l'oxydation des polyimides. Ce phénomène est bien connu dans toutes les familles de polymères hétérocycliques où l'addition d'enchaînements flexibles est utilisée pour augmenter la solubilité.

On a découvert, et c'est l'un des objets de l'invention, que certains monomères dérivés du benzhydrol ne présentaient aucun des inconvénients cités précédemment. En effet, ces monomères conduisent de façon tout à fait surprenante à des polyimides aromatiques solubles dans de nombreux solvants organiques. La réaction de polycondensation peut donc être réalisée de façon optimale dans un solvant approprié jusqu'à ce qu'il n'y ait pratiquement plus de monomères libres dans le milieu et que le polymére ait atteint la viscosité désirée.

L'invention a plus particulièrememt pour objet un procédé de préparation de compositions de Polyimides

aromatiques solubles consistant à faire réagir au moins une diamine aromatique de formule générale
$H_2N\text{-}Ar\text{-}NH_2$ (1)
avec au moins un composé aromatique de formule générale

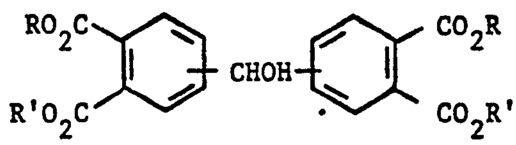

(2)

Dans ces formules, le radical Ar est un radical aromatique divalent carbocyclique ou hétérocyclique, dont les deux valences sont sur des atomes de carbone distincts non situés en position ortho l'un par rapport à l'autre. Le radical Ar peut être formé d'un cycle ou de plusieurs (par exemple de 2 à 6) cycles, qui sont alors accolés ou reliés entre eux, chaque cycle étant formé de préférence de 5 à 7 atomes dont une partie peut consister en atomes d'oxygène, de soufre et/ou d'azote.

Lorsque le radical Ar comporte plusieurs cycles reliés entre eux, les éléments de liaison sont par exemple la liaison simple ou l'un des atomes et groupements suivants :
-O- ; -S- ; -SO- ; $-SO_2-$ ; $-CH_2-$ ; $-CF_2-$ ; $-C(CH_3)_2-$ ; -CO- ; -CHOH- ; -COO- ; -CONH-.

R et R', identiques ou différents, sont des radicaux monovalents d'hydrocarbures renfermant de préférence chacun de 1 à 13 atomes de carbone, par exemple alcoyles inférieurs contenant de 1 à 13 atomes de carbone, cycloalcoyles ou aryles renfermant de 6 à 13 atomes de carbone. Dans ce cas, le composé de formule (2) est un tétraester ou un mélange de tétraesters de l'acide benzhydrol tétracarboxylique-3,3', 4,4'. Le radical R peut également représenter un atome d'hydrogène, R' étant défini comme ci-dessus, et le composé de formule (2) représente alors un bis-orthoacide-ester appelé plus simplement un diester de l'acide benzhydrol tétracarboxylique-3,3 ,4,4'.

L'enchaînement carbinol qui sépare les deux cycles aromatiques du benzhydrol est placé au milieu des liaisons carbone-carbone de ces cycles pour indiquer les possibilités d'isomérie.

Parmi les diamines qui conviennent pour la présente invention, on peut citer les diamino-1,3 et 1,4 benzène, les diamino-3,3' et 4,4' diphényl méthane, les diamino-3,3'et 4,4'diphényl éther, la benzidine, les diamino-3 3' et 4,4' diphényl sulfure, les diamino-3,3' et 4,4' diphényl sulfone, les diamino-3,3', (4,4'), (3,4') et 3',4 benzanilide, les diamino-3,3' et 4,4' benzoate de phényle, le bis-(amino-4 phényl) diméthyl silane, les diamino-2,4, (2,6) et 3,5 pyridine, la diméthoxy-3,3' benzidine, les diamino-3,3' et 4,4'benzopbénone, les diamino-3,3, et 4,4' benzhydrol.

Parmi les dérivés de l'acide benzhydrol tétracarboxylique-3,3',4,4' qui conviennent pour la présente invention, on peut citer les tétraesters symétriques, c'est à dire les composés de formule (2) dans laquelle les radicaux R et R' sont identiques, comme l'ester de tétraméthyle, l'ester de tétraéthyle, l'ester de tétrabutyle; les tétraesters dissymétriques représentés par la formule (2) avec des radicaux R et R', alkyle et/ou aryle, différents, comme l'ester de diméthyle diphényle, l'ester de diméthyle dibutyle, l'ester de diéthyle diphényle; les bis (ortho-acides-esters) appelés plus simplement diesters, c'est à dire les composés de formule (2) dans laquelle R est un atome d'hydrogène et R' un radical alkyle comme par exemple le diester de méthyle, le diester d'éthyle, le diester de n-propyle, le diester d'isopropyle, le diester de n-butyle, le diester d'isobutyle, le diester d'amyle, le diester d'hexyle, le diester de 2-hydroxyéthyle.

Dans le cas le plus général, les tétraesters dissymétriques et les diesters de l'acide benzhydrol tétracarboxylique-3,3',4,4' ne sont pas des composés purs mais un mélange d'isomères. Par exemple, le diester de méthyle peut être un mélange en proportions variables de dicarboxy-3,3' diméthoxycarbonyl-4,4' benzhydrol, de dicarboxy-4,4' diméthoxycarbonyl-3,3' benzhydrol et de dicarboxy-3,4' diméthoxycar-bonyl-4,3' benzhydrol.

Les compositions de polyimides de l'invention peuvent être utilisées dans des domaines d'application trés divers et les conditions de réaction sont en partie choisies en fonction de l'utilisation envisagée. La nature et la quantité de solvant, la température, la durée, le taux d'avancement de la réaction de polycondensation peuvent varier très largement selon qu'il s'agit de préparer un vernis, un film, un adhésif, un liant ou tout autre produit thermostable.

Dans le mode de mise en oeuvre préféré, on prépare une composition résineuse de polyimides en dissolvant dans un solvant approprié une diamine aromatique de formule (1) et une quantité de préférence sensiblement équimoléculaire d'un composé aromatique de formule (2). Ce sont naturellement les proportions stoechiométriques, comme dans toute réaction de polycondensation, qui donnent les polymères de plus haute massé moléculaire, mais pour certaines applications, il est possible d'employer un excès de l'un ou l'autre des monomères. Toutefois il est préférable que l'écart par rapport aux proportions stoechiométriques soit inférieur à 50 % et de préférence compris entre 0 et 20 % en mole. Le mélange réactionnel formé par le solvant et les

réactifs est ensuite chauffé à une température avantageusement supérieure à 80°C de préférence comprise entre 100 et 250°C, jusqu'à ce que la composition atteigne la viscosité désirée.

Les solvants utilisables avec lesquels on prépare les compositions de l'invention sont des composés organiques polaires, c'est à dire renfermant un hétéroatome tel que O, N, S, P, inertes vis à vis des monomères et des polymères. Parmi ces solvants on peut citer les phénols, comme le phénol, les crésols, les xylénols, les chlorophénols, les mono et diéthers de glycols, comme par exemple ceux de l'éthylèneglycol et du diéthylèneglycol, les mono et diesters de glycols, comme par exemple ceux de l'éthylèneglycol et du diéthylèneglycol, les amides, comme par exemple le méthylformamide, le diméthylformamide, l'hexaméthylphosphotriamide, le méthylacétamide, le diméthylacétamide, les urées, comme par exemple la tétraméthylurée, les composés hétérocycliques, comme par exemple la pyridine, la quinoléine, le dioxanne, le tétrahydrofuranne, la N-méthylpyrrolidone, la N-acétylpyrrolidone, la tétraméthylénesulfone, les sulfones et sulfoxydes comme par exemple la diméthylsulfone et le diméthylsulfoxyde.

Ces solvants peuvent être utilisés seuls ou mélangés entre eux ou encore en mélange avec d'autres composés organiques liquides parmi lesquels on peut citer les alcools tels que le méthanol, l'éthanol, le propanol, l'isopropanol, les butanols, l'alcool benzylique; les cétones, comme par exemple l'acétone, la butanone-2, la méthylisobutylcétone, la diisopropylcétone, la cyclohexanone, l'acétophénone; les hydrocarbures aromatiques, comme le benzène, le toluène, les xylènes, le solvant naphta, les hydrocarbures aromatiques halogénés, tels que le chlorobenzène, les dichlorobenzènes, les chlorotoluènes; les esters aliphatiques et aromatiques des acides carboxyliques aliphatiques et aromatiques, comme par exemple les acétates de méthyle, d'isopropyle, de butyle, de phényle, le benzoate de méthyle; des éthers, comme l'éther de dibutyle, l'éther de diphényle.

La concentration initiale des monoméres dans le solvant de réaction n'est pas critique mais elle est généralement comprise entre 10 et 80 % en poids. En fin de réaction la concentration de la composition résineuse est ajustée à une valeur telle que la solution ait une viscosité dynamique bien adaptée à l'utilisation envisagée. En d'autres termes, la concentration finale dépend de la masse moléculaire du polymère, de la nature du ou des solvants et de la température de mise en oeuvre. Pour effectuer des dépôts de polyimides de très faible épaisseur, il est préférable d'employer des compositions fortement polymérisées avec des concentrations comprises entre 10 et 30 % en poids. Pour d'autres applications, on utilise avantageusement des polymères de plus faible masse moléculaire avec des concentrations plus élevées, comprises par exemple entre 30 et 60 % en poids.

La température de la réaction de polycondensation peut varier dans un très large domaine, entre 80 et 400°C. Elle est généralement fixée à une valeur telle que la réaction des fonctions amines sur les dérivés de l'acide benzhydrol tétracarboxylique s'effectue à une vitesse raisonnable. Selon le solvant et les réactifs utilisés, une température comprise entre 100 et 250°C donne généralement de bons résultats. Les produits volatils (eau et/ou alcools) formés en cours de réaction peuvent être laissés dans le milieu, mais ils peuvent également être éliminés par distillation au fur et à mesure de leur formation ce qui permet de contrôler l'avancement de la réaction.

L'avancement d'une réaction de polycondensation est par définition le rapport entre le nombre de groupes fonctionnels ayant réagi et le nombre initial de ces mêmes groupes. Il peut être défini en pourcentage, (et à un avancement de par exemple 50 %, correspond la disparition de la moitié des fonctions réactives) ou en taux de réaction (p) tel que p soit compris entre 0 et 1. Dans ce cas, un avancement de 50 % a pour équivalent un taux de réaction de 0,5. Par définition, le degré de polycondensation ou DP est donné par la relation 1/1-P.

Les compositions de polyimides aromatiques de l'invention présentent une solubilité particulièrement élevée dans de nombreux solvants organiques. Par conséquent, il est possible de suivre aisément la formation des polymères par les techniques usuelles d'analyse. L'avancement de la réaction peut être déterminé simplement en mesurant la qquantité de produits volatils (eau et/ou alcool) distillés en cours de réaction. Cette méthode devient peu précise en fin de réaction quand il reste très peu de centres réactifs, c'est à dire lorsque l'avancement atteint 97 à 99 %. On utilise alors avantageusement le dosage des fonctions amines, acides et/ou esters qui constituent les fins de chaînes. La solubilité des polymères permet également d'employer toutes les méthodes d'analyse spectroscopiques (infrarouge, ultraviolet, résonance magnétique nucléaire) pour étudier la structure des polymères.

Lorsque la composition de polyimides est préparée en faisant réagir une diamine aromatique et un diester d'alkyle de l'acide benzhydrol tétracarboxylique, le poids de distillat (eau et alcool) donne l'avancement global de la réaction. De plus, la composition du distillat permet de connaître le taux de cyclisation en imide. En effet, la réaction d'une fonction amine sur un groupe acide-ester engendre un équivalent moléculaire d'eau et un équivalent moléculaire d'alcool chaque fois qu'il se forme un cycle imide. On a ainsi observé que les compositions de l'invention ont un taux d'imidation toujours supérieur à 90 % et généralement compris entre 95 et 100 %. Ce qui signifie que, par exemple, 95 à 100 % des fonctions amines ayant réagi sont engagées dans des cycles imides, le reste étant vraisemblablement sous forme d'amide-acide et/ou d'amide-ester.

Les compositions de l'invention sont préparées à divers degrés d'avancement, par exemple 50 à 99,9 %, en fonction de l'usage auquel elles sont destinées. Pour la plupart des applications, il est cependant préférable de prolonger la réaction jusqu'à ce que son avancement soit compris entre 90 et 99,9 %, de façon à éliminer la plus grande partie des composés volatils avant la mise en oeuvre du polymère. Un taux de conversion élevé présente en outre l'avantage de ne laisser dans le milieu que des quantités pondérales extrêmement faibles des monomères de départ.

Les polyimides aromatiques sont connus pour leur bonne résistance à la chaleur et à l'oxydation, mais le maximum de stabilité n'est atteint que si le polymère est totalement cyclisé en imide et qu'il n'a pratiquement plus de fonctions terminales oxydables, en particulier les groupes amine. Dans ces deux domaines, les compositions de l'invention ont des propriétés particulièrement avantageuses puisque la réaction de polycondensation et la réaction d'imidation ont lieu en solution. L'analyse des produits de réaction montre que les deux réactions se font simultanément et qu'elles peuvent être contrôlées pendant toute la durée de l'opération.

Pour de nombreuses applications, il est préférable d'utiliser des polymères déjà fortement cyclisés, non seulement pour augmenter la stabilité thermique, mais encore pour avoir un faible dégagement de composés volatils au moment de la mise en oeuvre. La porosité finale du matériau dépend en effet beaucoup de la quantité de produits volatils qui sont éliminés. On peut comparer les compositions de l'invention aux autres techniques de synthèse des polyimides dans, par exemple, la fabrication des matériaux composites. En utilisant pour enduire le substrat une solution de polyamide-acide préparée selon la méthode générale avec par exemple une mole de diamine et une mole de dianhydride, il y a, au moment de la mise en oeuvre, deux moles d'eau à éliminer sous forme de vapeur. Avec la technique usuelle des diesters, l'enduction est faite avec une solution des monomères contenant par exemple une mole de diester-diacide et une mole de diamine. Dans ce cas, il faut éliminer deux moles d'eau et deux moles d'alcool au moment de la fabrication. Avec une composition de l'invention, préparée à partir d'une mole de diamine aromatique et une mole de composé de formule (2), on obtient une solution d'enduction trés satisfaisante lorsque le degré d'avancement de la polycondensation est de l'ordre de 98 à 99 % avec un taux de cyclisation en imide d'au moins 98 %. Au moment de la fabrication du matériau composite, il y a donc quelques centièmes de mole de produits volatils à éliminer, ce qui est un avantage considérable.

Les compositions de polyimides solubles de l'invention ont d'excellentes propriétés adhésives vis à vis de nombreux matériaux mais, selon le type d'application, il peut être nécessaire d'ajuster le degré d'avancement de la réaction de polycondensation en fonction de la viscosité optimum. Les solutions de polyimides ont une viscosité, à concentration en matière sèche égale, qui augmente très fortement en même temps que la masse moléculaire des polymères au-delà de 95 % d'avancement de la réaction.

Pour les utilisations qui réclament une forte teneur en matière sèche, par exemple de l'ordre de 60 à 80 % en poids, les solutions de polyimides sont déjà très visqueuses lorsque les polymères ont une viscosité inhérente de 0,15 dl/g. Si cette dernière est comprise entre 0,2 et 0,4 dl/g, il est préférable de travailler avec des concentrations un peu plus faibles, par exemple comprises entre 30 et 50 %. Avec des solutions encore plus diluées, les polymères peuvent avoir une viscosité inhérente supérieure à 1,5 dl/g. Dans tous les cas la réaction de polycondensation est achevée au moment de la mise en oeuvre.

En ce qui concerne la mise en oeuvre, les compositions de polyimides solubles de l'invention présentent de nombreux avantages par rapport aux polyimides de l'art antérieur. La transformation en un article de forme déterminée est effectuée après évaporation du solvant par un traitement thermique approprié avec ou sans pression. Si les qualités requises sont surtout la résistance à la chaleur et à l'oxydation, les compositions sont utilisées seules ou associées à d'autres polymères thermostables. Mais, et c'est l'un des avantages tout à fait exceptionnel de ces compositions, elles peuvent aussi être utilisées pour augmenter la stabilité thermique de certaines substances polymériques connues.

On sait que les meilleures caractéristiques de souplesse, d'allongement, d'élasticité sont obtenues avec des polymères linéaires de haute masse moléculaire. L'ensemble des propriétés mécaniques disparait cependant lorsque la température d'utilisation approche la température de transition vitreuse. Pour un certain nombre d'applications, il est donc nécessaire de réticuler les polymères linéaires afin d'augmenter la résistance aux solvants, la température de transition vitreuse, la température de déflection sous charge et certaines propriétés mécaniques. Les compositions de l'invention sont particulièrement bien adaptées pour ces applications car elles peuvent être facilément réticulées.

Les fonctions alcool du benzhydrol disposées le long de la chaîne macromoleculaire du polymère sont en effet disponibles pour reagir avec d'autres composés simples ou polymériques contenant des groupes très réactifs comme les isocyanates, les époxydes, les titanates d'alkyle, les anhydrides d'acides carboxyliques, les halogénures d'acides carboxyliques, les siloxanes. Ces réactions sont tout à fait spécifiques des polyimides de l'invention en raison de leur solubilité et des taux d'imidation très élevé. En effet, si les réactifs cités ci-dessus sont ajoutés à une solution de polyamide-acide, ils réagissent de préference avec les fonctions acides carboxyliques libres ou avec l'eau formée pendant la cyclisation en imide plutôt qu'avec des groupes moins réactifs comme les alcools secondaires.

Dans le cadre de certaines utilisations, il peut être avantageux de mélanger les compositions de polyimides avec d'autres compositions de monomères ou de prépolymères jusqu'à la proportion de 50 % de façon à préparer des matériaux plus fortement réticulés. Généralement le mélange est effectué en solution avant la mise en oeuvre de la composition et c'est au cours du chauffage final que se termine la réaction de réticulation.

Selon les applications, on peut ajouter aux compositions des constituants inertes tels que pigments, colorants, charges organiques, minérales ou métalliques, poudres adhésives, additifs stabilisants à la chaleur et à l'oxydation, agents de gonflement, etc. Les articles façonnés avec ces compositions sont séchés pour évaporer le solvant et la réaction de polycondensation est achevée par un traitement thermique approprié à une température de préférence comprise entre 200 et 400°C.

L'invention sera décrite de façon plus précise en liaison avec les exemples spécifiques ci-après dans lesquels les détails sont donnés à titre illustratif et non limitatif. Dans ces exemples, les réactions de polycondensation sont effectuées sous agitation et en atmosphère inerte pour éviter l'oxydation des amines aromatiques. Les solvants utilisés n'ont pas besoin d'être parfaitement anhydres mais dans le cas où ils contiennent de l'eau, il faut en tenir compte si le poids des composés volatils qui distillent sert de test pour déterminer l'avancement de la réaction. D'une manière générale, l'eau et/ou l'alcool formés au cours de la polycondensation sont distillés en continu afin de suivre la formation du polymère.

Dans ces exemples, les viscosités inhérentes, lorsqu'on les donne, sont mesurées à 30°C pour une concentration de 5 g de composition par litre de N-méthyl pyrrolidone. Si un autre solvant est utilisé pour cette mesure, son nom est indiqué avec la valeur de la viscosité. Les viscosites dynamiques des solutions sont mesurees a 30°C avec un viscosimètre cône/plan et sont exprimées en millipascal-seconde (mPa.s).

Les masses moléculaires, lorsqu'elles sont indiquées, correspondent à des masses moléculaires moyennes en nombre ($\bar{M}n$). Elles sont soit mesurées par le dosage des fonctions réactives terminales, soit calculées à partir du degré d'avancement par les équations statistiques classiques ($\bar{M}n = \bar{M}o/1\text{-}p$, $\bar{M}o$ étant la masse moléculaire moyenne de l'unité structurale récurrente et p le degré d'avancement mesuré).

Pour simplifier l'écriture des noms de produits chimiques, les mélanges de composés isomères sont désignés par un terme au singulier comme par exemple le diester de méthyle de l'acide benzhydrol tétracarboxylique-3, 3', 4, 4',

La présence des enchainements imides cycliques dans les polymères solubles obtenus lorsqu'on opère comme décrit dans les exemples selon l'invention a été déterminée par les méthodes d'analyse classiques; analyse élémentaire, réaction à l'hydrate d'hydrazine, spectrographie infrarouge, résonance magnétique nucléaire du proton, résonance magnétique nucléaire du carbone-13 et analyse thermogravimétrique.

Les exemples 1, 2, 22 et 23 sont donnés à titre de comparaison.

**EXEMPLE 1** (comparatif)

Un mélange de 28,22 g (0,1 mole) de diester de méthyle de l'acide pyromellitique, 20 g (0.1 mole) de bis(amino-4 phényl) éther et 48 g de N-méthyl pyrrolidone est chauffé à 140°C. Lorsque la température du mélange atteint 118°C, il se forme progressivement un précipité beige clair dont le poids croit rapidement avec le temps de réaction. Après deux heures de chauffage, on a éliminé par distillation environ 0,1 mole d'eau et 0,1 mole de méthanol ce qui correspond à un avancement de la réaction de 50 %. Le mélange de produits ainsi obtenu n'est pas soluble dans les solvants organiques et sa température de fusion est supérieure à 250°C.

Par extraction avec de l'éthanol bouillant, on obtient 4,8 g de diamine soit 22 % en poids de la quantité initiale. Le mélange obtenu est donc formé d'oligomères de faible masse moléculaire et de réactifs de départ. Etant insoluble et difficilement fusible, un tel mélange n'est pas utilisable pour des applications pratiques.

**EXEMPLE 2** (comparatif)

On fait réagir dans les conditions de l'exemple 1 38,63 g (0,1 mol ) de diester de méthyle de l'acide benzophénone tétracarboxylique-3, 3', 4,4' avec 19,8 g (0,1 mole) de bis(amino-4 phényl) méthane dans 58 g deN-méthyl pyrrolidone. Comme dans l'exemple précédent, il se forme un précipité insoluble et infusible d'oligomères contenant 18 % en poids de la quantité initiale de diamine. Ce mélange ne peut être mis en oeuvre pour préparer des articles façonnés.

**EXEMPLE 3**

Un mélange de 38,83 g (0,1 mole) de diester de méthyle de l'acide benzhydrol tétracarboxylique-3,3',4,4', 20 g de bis(amino-4 phényl) éther et 59 g de N-méthyl pyrrolidone est chauffé à 140°C. La solution reste limpide pendant toute la durée du chauffage et la formation du polymère est suivie en mesurant sa viscosité inhérente après 2 h, 4 h, 6 h, 9 h, 13 h et 24 h de réaction. Les valeurs obtenues sont respectivement de 0,1, 0,15, 0,20, 0,25, 0,30 et 0,36 dl/g. La solution limpide de couleur rouge a, en fin de réaction, une concentration en polymère de 46 % et une viscosité dynamique de 12000 mPa.s. Après dilution avec 10 g d'éthanol et 8 g de xylène, elle est utilisée pour étendre un film sur une plaque de verre. Le film est séché dans une étuve à ventilation forcée à 100°C pendant 1 h puis 2 h à 200°C. Le film est séparé du support par trempage dans l'eau pendant 24 h puis traité 20 min à 300°C. Après cette opération on obtient un film de polyimide jaune-orangé souple et résistant.

**EXEMPLE 4**

Un mélange de 388,34 g de diester de méthyle de l'acide benzhydrol tétracarboxylique-3,3',4,4' et de 198,27 g de bis(amino-4 phényl) méthane dans 535 g de m-crésol est plongé dans un bain d'huile chauffé à 170°C. Au bout de 15 minutes la température du mélange atteint 110°C et les premières gouttes de distillat apparaissent en tête de colonne. Dans le tableau 1, ce moment est fixé comme étant le temps zéro de la réaction à partir duquel on note la durée de réaction, la température de la solution, le poids de distillat et le degré de polycondensation calculé (DP).

**Tableau 1**

| Durée de réaction en min | Température en °C | Poids de distillat en g | Degré de polymérisation |
|---|---|---|---|
| 0 | 110 | 0 | 1 |
| 4 | 118 | 7,8 | 1,1 |
| 5,8 | 121 | 16,7 | 1,2 |
| 7,5 | 122 | 24,9 | 1,3 |
| 9,5 | 122 | 33,2 | 1,5 |
| 11,8 | 124 | 41 | 1,7 |
| 15,5 | 126 | 48,8 | 1,9 |
| 20,5 | 129 | 56,9 | 2,3 |
| 28,7 | 131 | 65,6 | 2,9 |
| 39 | 141 | 73,4 | 3,8 |
| 54,7 | 145 | 81,5 | 5,4 |
| 70 | 149 | 89,8 | 9,8 |
| 240 | 155 | 96,5 | 28,5 |
| 420 | 160 | 97,7 | 41,6 |

Après 7 heures de réaction, le poids de distillat est de 97.7 g alors qu'à 100 % de conversion, il devrait être de 100,12 g. Le taux d'avancement global est donc de 97,6 %, ce qui donne une masse moléculaire moyenne calculée de 10000 à 12000. L'analyse des fonctions réactives terminales donne une masse moléculaire moyenne de 10800 et un taux de cyclisation en imide supérieur à 96 %.

La composition de polyimide a une viscosité inhérente de 0,505 dl/g. Dans le m-crésol elle est de 0,62 dl/g. La concentration en matière sèche, qui est de 47,7 %, est ramenée à 35 % par addition de xylène pour donner une solution ayant une viscosité de 2600 mPa.s. Elle est alors utilisable pour déposer une couche de polyimide sur divers substrats métalliques comme le cuivre, l'aluminium, le titane et l'acier. Après séchage, un traitement thermique de 15 minutes à 300 °C donne un revêtement souple et très adhérent sur les différents métaux.

**EXEMPLE 5**

Un mélange de 416,39 g de diester d'éthyle de l'acide benzhydrol tétra-carboxylique-3,3',4,4', 200,24 g de bis(amino-4 phényl) éther et 600 g de N-méthyl pyrrolidone est plongé dans un bain d'huile chauffé à 150 °C. Après 3 heures de réaction, la température de la solution est de 140 °C, l'avancement de la polycondensation de 76 % et la viscosité inhérente de 0,17 dl/g. La température du bain d'huile est alors portée à 160 °C. Une heure plus tard, la température de la solution est de 154 °C, l'avancement de 82 % et la viscosité de 0,3 dl/g. Pour finir, le mélange est chauffé pendant 2 heures à 170 °C, soit une température interne de 164 °C, pour donner une composition ayant une viscosité de 0,41 dl/g et un taux d'avancement de 95 %.

La solution parfaitement limpide est précipitée avec une très forte agitation dans 5 litres de méthanol. Le polymère est lavé au méthanol bouillant, à l'eau, puis séché sous vide à 90 °C pendant 24 heures. Le rendement en polymère solide est de 487,2 g ( ≈100 %).

On prépare une composition adhésive en dissolvant le produit solide dans le dioxanne à une concentration de 30 % en poids. Après 15 minutes de reflux dans le solvant et refroidissenent à température ambiante, on obtient une solution limpide de couleur rouge clair, ayant une viscosité de 2800 mPa.s.

**EXEMPLE 6**

On prépare une composition de polyimide en chauffant à 200 °C pendant 3 heures, 42 g de tétraméthoxycarbonyl-3,3',4,4' benzhydrol, 20 g de bis(amino-4 phényl) éther et 55 g de m-crésol. A la fin de la réaction, la viscosité inhérente est de 0,33 dl/g et la viscosité dynamique de 8200 mPa.s.

**EXEMPLES 7 à 17**

On prépare une série de compositions de polyimides aromatiques solubles en faisant réagir des quantités équimoléculaires (0,1 mole) de diester de méthyle de l'acide benzhydrol tétracarboxylique-3,3',4,4' avec diverses diamines aromatiques. Les conditions de réaction (nature de l'amine et du solvant, température et durée de la réaction) sont indiquées dans le tableau 2. Dans ce même tableau, les compositions adhésives sont caractérisées par la mesure de la viscosité inhérente. Dans tous ces exemples, la concentration initiale des monomères est de 50 % en poids dans le solvant indiqué. Les abréviations utilisées sont les suivantes : MDA, méthylène-dianiline ; ODA, oxydianiline ; DABA, diaminobenzanilide ; DABP, diaminobenzophénone ; MPDA, métaphénylènediamine ; DABH, diamino-benzhydrol ; DADP, diaminodiphényle ;DADPS diaminodiphénylsulfone ; DMAC, diméthylacétamide ; NMP, N-méthylpyrrolidone ; HMPT, hexaméthylphosphotriamide ; XYL, xylénol-3,4 ; MCP, métachlorophénol.

Tableau 2

| Exemple n° | Diamine | Solvant | T °C | Durée h | Viscosité inhérente dl/g |
|---|---|---|---|---|---|
| 7 | MPDA | NMP | 175 | 6 | 0,54 |
| 8 | MDA-4,4' | diglyme | 150 | 4 | 0,17 |
| 9 | MDA-4,4' | dioxanne | 110 | 24 | 0,28 |
| 10 | ODA-4,4' | DMAC | 150 | 4 | 0,23 |
| 11 | ODA-4,4' | XYL | 225 | 6 | 0,81 |
| 12 | DABA-3,3' | MCP | 210 | 6 | 0,69 |
| 13 | DABP-4,4' | NMP | 170 | 7 | 0,48 |
| 14 | DABH-3,3' | HMPT | 160 | 6 | 0,52 |
| 15 | DABH-4,4' | crésol | 200 | 8 | 0,94 |
| 16 | DADP-4,4' | XYL | 205 | 3 | 0,30 |
| 17 | DADPS-4,4' | XYL | 225 | 6 | 0,42 |

**EXEMPLE 18**

Une composition de polyimide préparée comme dans l'exemple 4 avec une viscosité inhérente de 0,5 dl/g est précipitée dans le méthanol pour donner un solide fibreux de couleur crême. On fait une solution de 30 g de ce produit dans 48 g de dioxanne à laquelle on ajoute 14 g de diglycidyléther du bis-phénol-A (DGEBA) ayant un indice d'époxyde de 0,504 fonction par 100 g. Lorsque la solution est devenue parfaitement limpide, elle est chauffée progressivement au dessus de 100 °C pour évaporer le solvant. La température est ensuite portée de 120° à 190 °C en 30 minutes. Le mélange homogène de couleur miel initialement très visqueux se solidifie progressivement. Après 30 minutes à 190 °C le produit est devenu infusible et insoluble.

L'opération précédente est répétée avec 16 g de composition de polyimide 4 g de DGEBA et 25 g de dioxanne. La réaction est effectuée par chauffage à 130 °C pendant 30 minutes pour donner une solution très visqueuse qui est utilisée pour déposer un film sur une plaque de verre. Le solvant est évaporé pendant 1 h à 100 °C et le film est réticulé par chauffage à 150 °C, 170 °C et 200 °C respectivement pendant 15 min, 30 min et 2 heures. Le film de polyimide réticulé adhère très fortement au verre.

**EXEMPLE 19**

Un mélange de 32 g de polyimide de l'exemple 18, 7,2 g de bis(isocya-nato-4 phényl)méthane et 90 g de dioxanne est chauffé pendant 1 h à 100 °C. Le solvant est ensuite distillé et le mélange est chauffé à 150°C pendant 10 min puis à 200°C pendant 15 min. Il donne d'abord un gel transparent puis un solide infusible et

insoluble.

L'opération précédente est répétée avec 8,44 g de polyimide. 20, 6 g de dioxanne et 0,5 g de diisocyanaté. Après 1 h de chauffage à 100-110°C la solution est utilisée pour étendre un film sur une plaque de verre. Un traitement thermique à 100, 150 et 200°C respectivement pendant 45 min, 2 h et 15 min, donne un film réticulé fortement collé sur le verre et insensible aux solvants.

**EXEMPLE 20**

Une composition de polyimide est préparée avec 388 g de diester de méthyle de l'acide benzhydrol tétracarboxylique-3,3',4,4' et 198 g de bis(amino-4 phényl)méthane dans un mélange de 200 g de xylénol et 200 g de crésol. La réaction est effectuée pendant 2 h à 130°C,2 h à 150°C et 3 h à 200°C, puis le mélange est dilué à 30 % en poids de matière sèche par addition d'un mélange solvant contenant 1 volume de crésol, 1 volume d'éthanol et 2 volumes de xylène. Après refroidissement à 60 °C, on ajoute comme agent réticulant 20 g de titanate de tétrabutyle et on chauffe la solution pendant 1 h à 120 °C. La viscosité dynamique de la solution est de 3000 mPa.s. Elle est utilisée pour déposer sur un conducteur métallique une couche de vernis isolant souple et tenace qui adhère fortement sur le métal. Les polyimides obtenus comme decrit dans les exemples selon l'invention, le cas echéant sous la forme de films, de revêtements, de vernis, etc.. sont des matériaux homogènes et non-poreux.

**EXEMPLE 21, EXEMPLES 22 et 23** (Comparatifs)

A titre comparatif, on prépare trois compositions de polyimides ou de précurseurs de polyimides selon la technique de l'invention et les procédés de l'art antérieur.

**Composition A** (exemple 21 selon l'invention)

On fait réagir à 200° C pendant 4 heures des quantités équimoléculaires de diester de méthyle de 1 acide benzhydrol tétracarboxylique-3,3',4,4' et de bis (amino-4 phényl) méthane en solution dans la N-méthyl pyrrolidone, avec une concentration initiale en matière sèche de 50 %. Après 3 heures de réaction, la solution est diluée par addition progressive du même solvant pour arriver à une concentration finale de 20 %. Le polymère obtenu a une viscosité inhérente de 0,9 dl/g et un taux de cyclisation en imide supérieur à 97 %.

**Composition B** (exemple comparatif 22)

On prépare une composition résineuse de précurseurs de polyimides en mélangeant des quantités équimoléculaires de diester de méthyle de l'acide benzophénone tétracarboxylique-3,3',4,4' et de bis (amino-4 phényl) méthane dans la N-méthyl pyrrolidone de façon à avoir une concentration en matière sèche de 40 %.

**Composition C** (exemple comparatif 23)

On prépare une solution de polyamide-acide en ajoutant progressivement 1 mole d'anhydride benzophénone tétracarboxylique à 1 mole de bis (amino-4 phényl) éther en solution dans la N-méthyl pyrrolidone. En fin de réaction à la température ambiante, la concentration en matière sèche est de 15 % et le polyamide-acide a une viscosité inhérente de 1,15 dl/g.

Les compositions A, B et C sont utilisées pour coller des éprouvettes normalisées en acier inoxydable destinées à des mesures de résistance en cisaillement longitudinal. Les surfaces à coller sont enduites avec les solutions précédentes et le solvant est évaporé dans une étuve à ventilation forcée pendant 30 minutes à 100° C et 30 minutes à 150° C. Les éprouvettes sont placées deux par deux dans un guide de collage qui assure un recouvrement de 1,27 cm des extrémités enduites d'adhésif. Elles sont alors placées entre les plateaux d'une presse hydraulique chauffés à 220° C et laissées pendant 6 heures à cette température sous une pression de 0,5 MPa. Elles sont ensuite recuites dans une étuve pendant 1 heure à 280° C, 10 heures à 300° C et 1 heure à 325° C.

La résistance au cisaillement longitudinal est mesurée avec une machine de traction qui donne les valeurs suivantes pour des températures d'essai de 20,200 et 250° C.

<u>Composition A</u> : 29,4 - 33,3 MPa, 26,5 - 30,4 MPa et 19,6 - 21,6 MPa.

Composition B : 19,6 - 20,6 MPa, 19,6 - 20,6 MPa et 14,7 - 15,7 MPa.
Composition C : 21,6 - 23,5 MPa, 20,6 - 21,6 MPa et 10,8 - 12,7 MPa.

L'examen optique des surfaces de rupture montre que pour la composition A de polyimides de l'invention, le joint de colle est homogène et dépourvu de bulles alors que les compositions B et C donnent des surfaces irrégulières avec de nombreuses bulles et des zones de gonflement.

Dans un autre essai, des parties des solutions décrites ci-dessus sont utilisées pour imprégner une étoffe de verre E - 181 avec un apprêt au $\gamma$ -aminopropyltriethoxysilane. L'impregnation est faite en plusieurs passages sur les deux faces du tissu avec évaporation du solvant à chaque passage pour obtenir un pré-imprégné contenant 35 à 37 % de résine. Chaque pré-imprégné est découpé en 12 éléments identiques de 20 x 20 cm qui sont superposés et placés entre les plateaux d'une presse hydraulique chauffés à 250° C. Après 2 minutes de contact, on applique une pression de 1,5 MPa et la température est élevée jusqu'à 300° C en 30 minutes et maintenue à cette valeur pendant 3 heures avant refroidissement et éjection des stratifiés.

L'homogénéité des matériaux est déterminée par le calcul du pourcentage de vide selon la spécification LP 406 B méthodes 5011 et 7061 pour la mesure de la masse spécifique du stratifié et son contenu en résine.

Le volume calculé du stratifié est donné par la formule :

$$x = \frac{m_s\ R}{m_r} + \frac{m_s\ V}{m_v}$$

dans laquelle $m_s$ , $m_r$ et $m_v$ sont les masses spécifiques respectives du stratifié, de la résine et du verre. R et V représentent sous forme décimale les pourcentages de résine et de verre dans le stratifié.

Les stratifiés préparés avec les compositions A, B et C ont des pourcentages de vide qui sont respectivement de 1, 21 et 13 %. Les résines pré-imidées de l'invention donnent donc des matériaux beaucoup plus homogènes et compacts en raison de l'absence de composés volatils.

Un autre avantage des compositions de polyimides de l'invention est démontré par la conservation des tissus de verre pré-imprégnés utilisés pour fabriquer les stratifiés. Lorsque ces tissus sont conservés à l'air libre, à la température ambiante, on observe les phénomènes suivants :

Composition A : Le pré-imprégné conserve sa couleur jaune clair et ne subit aucune modification pendant 1 an.

Composition B : Le pré-imprégné devient brun puis noir en moins d'une semaine par suite de l'oxydation de la diamine.

Composition C : Le pré-imprégné devient brun et le polyamide-acide se dégrade progressivement en 1 mois. Sa viscosité inhérente qui était initialement de 1,15 dl/g est tombée à une valeur de 0,3 dl/g.

**Revendications**

1.- Procédé de préparation d'une composition de polyimide présentant une solubilité élevée, caractérisé en ce qu'il comprend la réaction, au sein d'un solvant polaire et à une température de 80 à 400° C, d'au moins une diamine primaire aromatique avec au moins un tétra-ester ou un diacide-diester de l'acide benzhydrol tétracarboxylique-3,3',4,4' en proportions sensiblement stoechiométriques, la concentration initiale des monomeres dans le solvant étant comprise entre 10 et 80% en poids et la réaction étant poursuivie jusqu'à un degré d'avancement de 50 à 99,9% correspondant à une viscosité inhérente d'au moins 0,1 dl/g et d'au plus 2 dl/g mesurée dans la N-méthyl pyrrolidone à 30°C pour une concentration de 5 g de composition par litre de N-méthyl pyrrolidone.

2.- Procédé selon la revendication 1, caractérisé en ce que l'on met en jeu au moins une diamine de formule générale

$H_2N\text{-}Ar\text{-}NH_2$ (1)

où Ar est un radical aromatique divalent, carbocyclique ou hétérocyclique, les groupes NH étant fixés à des atomes de carbone distincts dudit radical, non situés en position ortho l'un par rapport à l'autre, avec au moins un tétraester ou diester-diacide de formule générale

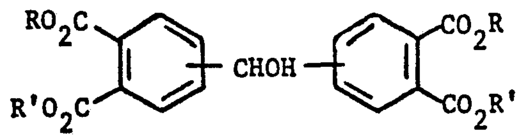

(2)

où R' est un radical monovalent d'hydrocarbure et R un atome d'hydrogène ou un radical monovalent d'hydrocarbure.

3.- Procédé selon la revendication 2, caractérisé en ce que ladite diamine est le bis (amino-4 phényl) éther ou le bis (amino-4 phényl) méthane et en ce que ledit tétraester ou diester-diacide de l'acide benzhydroltétracarboxylique 3,3',4,4' est le tétraester de méthyle, le diester de méthyle ou le diester d'éthyle.

4.- Procédé selon l'une des revendications 1 à 3, caractérisé en ce que la réaction est effectuée à une température de 100 à 250° C.

5.- Procede selon l'une des revendications la 4, caractérisé en ce que la réaction est poursuivie jusqu'à un degré de polycondensation correspondant à l'élimination de 90 à 99,9 % des produits volatils susceptibles de se former.

6.- Procédé selon l'une des revendications 1 à 5, caractérisé en ce qu'il comprend en outre la mise en oeuvre de ladite solution de polyimide, l'évaporation du solvant et l'achèvement de la polycondensation.

7.- Procédé selon la revendication 6, caractérisé en ce que l'on met en oeuvre une solution ayant une concentration d'environ 60 à 80 % en poids d'un polyimide présentant une viscosité inhérente allant jusqu'à environ 0,15 dl/g.

8.- Procédé selon la revendication 6, caractérisé en ce que l'on met en oeuvre une solution ayant une concentration d'environ 30 à 50 % en poids d'un polyimide présentant une viscosité inhérente de 0,2 à 0,4 dl/g.

9.- Procédé selon la revendication 6, caractérisé en ce que l'on met en oeuvre une solution ayant une concentration inférieure à environ 30 % en poids d'un polyimide présentant une viscosité inhérente supérieure à 1,5 dl/g.

10.- Procédé selon l'une des revendications 6 à 9, caractérisé en ce que l'on fait réagir le polyimide en solution avec un agent de réticulation.

11. Utilisation d'une solution de polyimide obtenu par le procédé selon l'une quelconque des revendications 1 à 10 comme composition filmogène.

12. Utilisation d'une solution de polyimide obtenu par le procédé selon l'une quelconque des revendications 1 à 10 dans la préparation d'une composition adhésive.

13. Utilisation d'une solution de polyimide obtenu par le procédé selon l'une quelconque des revendications 1 à 10 dans la fabrication d'un matériau composite.

**Patentansprüche**

1. Verfahren zur Herstellung einer Polyimidzusammensetzung mit erhöhter Löslichkeit, dadurch gekennzeichnet, daß man in einem polaren Lösungsmittel und bei einer Temperatur von 80 bis 400° C zumindest ein primäres aromatisches Diamin mit zumindest einem Tetraester oder einem Disäure-diester der 3,3',4,4' Benzhydroltetracarbonsäure in praktisch stöchiometrischen Mengen umsetzt, wobei die Anfangskonzentration der Monomeren in dem Lösungsmittel zwischen 10 und 80 Gew.-% liegt und die Reaktion bis zu einem Grad des Fortschreitens von 50 bis 99,9 % fortgeführt wird entsprechend einer inherenten Viskosität von zumindest 0,1 dl/g und höchstens 2 dl/g, gemessen in N-Methylpyrrolidon bei 30° C für eine Konzentration von 5 g der Zusammensetzung pro Liter an N-Methylpyrrolidon.

2. Verfahren nach Anspruch 1, dadurch gekennzeichnet, daß man zumindest ein Diamin der allgemeinen Formel

$H_2N - Ar - NH_2$ (1)

worin Ar ein zweiwertiger aromatischer carbocyklicher oder heterocyklischer Rest ist und die Gruppen NH an zwei verschiedenen Kohlenstoffatomen dieses Restes sitzen, die nicht in Ortho-Stellung zueinander stehen, mit zumindest einem Tetraester oder Diester-disäure der allgemeinen Formel

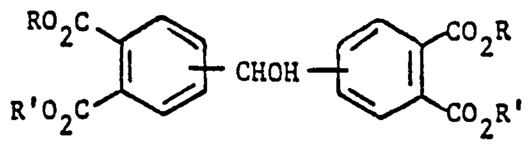

(2)

einsetzt,

worin R' ein einwertiger Kohlenwasserstoffrest und R ein Wasserstoffatom oder ein einwertiger Kohlenwasserstoffrest sind.

3. Verfahren nach Anspruch 2, dadurch gekennzeichnet, daß dieses Diamin Bis-(amino-4-phenyl)-äther oder Bis-(amino-4-phenyl)-methan und dieser Tetraester oder Diester-disäure der 3,3',4,4' Benzhydroltetracarbonsäure der Methyltetraester, der Methyldiester oder der Athyldiester sind.

4. Verfahren nach einem der Ansprüche 1 bis 3, dadurch gekennzeichnet, daß die Reaktion bei einer Temperatur von 100 bis 250°C durchgeführt wird.

5. Verfahren nach einem der Ansprüche 1 bis 4, dadurch gekennzeichnet, daß die Reaktion bis zu einem Polykondensationsgrad durchgeführt wird, der einer Beseitigung von 90 bis 99,9 % der flüchtigen Produkte, die sich bilden können, entspricht.

6. Verfahren nach einem der Ansprüche 1 bis 5, dadurch gekennzeichnet, daß es außerdem den Einsatz dieser Lösung des Polyimids, das Verdampfen des Lösungsmittels und den Abschluß der Polykondensation umfaßt.

7. Verfahren nach Anspruch 6, dadurch gekennzeichnet, daß man eine Lösung einsetzt, die eine Konzentration von etwa 60 bis 80 Gew.-% an Polyimid mit einer inherenten Viskosität, die bis etwa 0,15 dl/g geht, aufweist.

8. Verfahren nach Anspruch 6, dadurch gekennzeichnet, daß man eine Lösung einsetzt, die eine Konzentration von etwa 30 bis 50 Gew.-% Polyimid mit einer inherenten Viskosität von 0,2 bis 0,4 dl/g aufweist.

9. Verfahren nach Anspruch 6, dadurch gekennzeichnet, daß man eine Lösung einsetzt, die eine Konzentration unter etwa 30 Gew.-% Polyimid mit einer inherenten Viskosität von über 1,5 dl/g aufweist.

10. Verfahren nach einem der Ansprüche 6 bis 9, dadurch gekennzeichnet, daß man das Polyimid in Lösung mit einem Vernetzungsmittel reagieren läßt.

11. Verwendung einer Polyimidlösung, die nach einem der Ansprüche 1 bis 10 erhalten ist als Film-bildende Zusammensetzung.

12. Verwendung einer Polyimidlösung, die nach einem Verfahren gemäß einem der Ansprüche 1 bis 10 erhalten ist, zur Herstellung einer Klebstoffmasse.

13. Verwendung einer Polyimidlösung, die nach einem Verfahren gemäß einem der Ansprüche 1 bis 10 erhalten ist, zur Herstellung eines Verbundstoffes.

**Claims**

1. A process for preparing a polyimide composition having a high solubility, characterized in that it comprises reacting, in a polar solvent and at a temperature of from 80 to 400°C, at least one aromatic primary diamine and at least one tetra-ester or diacid-diester of benzhydrol 3,3',4,4'-tetracarboxylic acid, in substantially stoichiometric proportions, the initial concentration of the monomers in the solvent being comprised between 10 and 80% by weight and the reaction being continued until a rate of progress of from 50 to 99.9% which corresponds to an inherent viscosity of at least 0.1 dl/g and at most 2 dl/g is obtained, as measured in N-methyl pyrrolidone at 30°C at a concentration of 5 g of composition per liter of N-methyl pyrrolidone.

2. A process according to claim 1, characterized in that there is used at least one diamine of the general formula

$H_2N\text{-}Ar\text{-}NH_2$

wherein Ar is a divalent, carbocyclic or heterocyclic aromatic radical, the NH groups being fixed to separate carbon atoms of said radical, not located in ortho position with respect to each other, and at least one tetraester or diacid-diester of the general formula

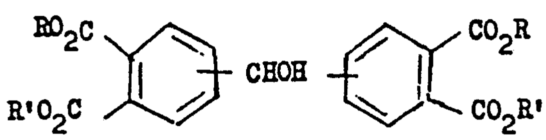

wherein R′ is a monovalent hydrocarbon radical and R is a hydrogen atom or a monovalent hydrocarbon radical.

3. A process according to claim 2, characterized in that said diamine is bis (4-amino phenyl) ether or bis (4-amino phenyl) methane, and said tetraester or diester-diacid of benzhydrol 3,3′,4,4′-tetra-carboxylic acid is the methyl tetraester, the methyl diester or the ethyl diester.

4. A process according to one of claims 1 to 3, characterized in that the reaction is effected at a temperature of from 100 to 250°C.

5. A process according to one of claims 1 to 4, characterized in that the reaction is continued up to a polycondensation degree corresponding to the removal of from 90 to 99.9% of the volatile products able to form.

6. A process according to one of claims 1 to 5, characterized in that it further comprises working the polyimide solution, eveporating the solvent and completing the polycondensation.

7. A process according to claim 6, characterized in that the solution worked has a concentration of from about 60 to 80% by weight of a polyimide having an inherent viscosity of at most about 0.15 dl/g.

8. A process according to claim 6, characterized in that the solution worked has a concentration of from about 30 to 50% by weight of a polyimide having an inherent viscosity of from 0.2 to 0.4 dl/g.

9. A process according to claim 6, characterized in that the solution worked has a concentration lower than about 30% by weight of a polyimide having an inherent viscosity higher than 1.5 dl/g.

10. A process according to one of claims 6 to 9, characterized in that the polyimide is reacted in solution with a crosslinking agent.

11. The use of a solution of a polyimide obtained by the process according to any one of claims 1 to 10 as a film-forming composition.

12. The use of a solution of a polyimide obtained by the process according to anyone of claims 1 to 10 for preparing an adhesive composition.

13. The use of a solution of a polyimide obtained by the process according to any one of claims 1 to 10 for manufacturing a composite material.